Europäisches Patentamt

European Patent Office

Office européen des brevets

(11) Numéro de publication: **0 238 385 B1**

# FASCICULE DE BREVET EUROPEEN

(45) Date de publication de fascicule du brevet:
19.06.91

(51) Int. Cl.⁵: **A23L 1/221**

(21) Numéro de dépôt: **87400444.3**

(22) Date de dépôt: **27.02.87**

(54) **Procédé de diffusion des huiles essentielles et oléorésines d'épices dans une solution porteuse.**

(30) Priorité: **21.03.86 FR 8604491**

(43) Date de publication de la demande:
**23.09.87 Bulletin 87/39**

(45) Mention de la délivrance du brevet:
**19.06.91 Bulletin 91/25**

(84) Etats contractants désignés:
**AT BE CH DE ES GB GR IT LI LU NL SE**

(56) Documents cités:
**FR-A- 2 245 296
US-A- 3 652 297
US-A- 3 959 510
US-A- 4 112 125**

(73) Titulaire: **PB GELATINS FRANCE SA
Z.I. rue du Mont de Templemars NOYELLES
LES SECLIN
F-59139 WATTIGNIES(FR)**

(72) Inventeur: **Voituriez, Daniel
56, rue Gambetta
F-59320 Haubourdin(FR)**

(74) Mandataire: **Lepage, Jean-Pierre
Cabinet Lemoine & Associés 12, Boulevard
de la Liberté
F-59800 Lille(FR)**

## Description

L'invention est relative à un procédé de diffusion des huiles essentielles et oléorésines d'épices dans une solution porteuse. Elle trouvera notamment son application dans le domaine de la charcuterie fraîche, sèche ou cuite, pour constituer des assaisonnements aux jambons, pâtés, saucissons et autres, ainsi que dans la cuisine sous vide ou les boissons.

On connaît le rôle capital joué par les épices pour agrémenter les plats culinaires et en particulier, la charcuterie. Il s'agit d'un assaisonnement indispensable qui permet de déterminer les nuances et la saveur du mets.

L'emploi des épices est connu de longue date et leurs dosages et répartitions constituent un art difficile.

On a essayé, depuis très longtemps, d'extraire par certains procédés, les principes sapides ou aromatiques des épices, plantes condimentaires, plantes aromatiques ainsi que de substances non végétales, tirées du règne minéral ou du règne animal.

On connait la macération : c'est une opération qui consiste à laisser en contact pendant un temps déterminé la substance dont on veut extraire le principe actif dans un solvant à froid. Après division du produit et en agitant le mélange de temps en temps, on obtient ainsi un "macéré". On emploie ce procédé pour extraire un principe actif altérable à la chaleur (exemple : réglisse), le solvant étant de l'eau.

On connait l'infusion : c'est une opération qui consiste à verser un liquide bouillant, tel que l'eau, sur une substance dont on veut extraire le principe actif et à laisser le tout en contact jusqu'à refroidissement. On obtient ainsi un "infusé". On emploie ce procédé pour des produits à tissus délicats tels que feuilles ou fleurs de plantes et contenant des principes volatils (exemple : tisanes de fleurs ou de feuilles).

On connait la digestion : c'est une opération qui consiste à maintenir la substance en contact avec un solvant, qui peut être de l'eau, à une température élevée mais inférieure à l'ébullition. On obtient ainsi un "digesté". On emploie ce procédé pour des substances dont les principes actifs seraient détruits par l'ébullition mais non extraits à froid (exemple : extraits d'animaux).

On connait le décoction : c'est une opération qui consiste à maintenir la substance en contact avec un solvant, qui peut être de l'eau, porté à température d'ébullition pendant un temps déterminé. On obtient ainsi un "décocté". On emploie ce procédé pour le traitement de substances dont on veut extraire certains principes actifs, sans conserver les principes volatils.

On connait la lixiviation : c'est une méthode d'épuisement qui consiste à verser un solvant qui peut être de l'eau, sur une substance pulvérisée disposée en couche plus ou moins épaisse dont il entraîne par déplacement les principes actifs. Cette opération est basée sur le principe suivant, à savoir que le solvant traversant une substance en couche se chargera petit à petit de substances dissoutes qu'il entraînera au fur et à mesure de son écoulement pour permettre l'épuisement total des principes actifs.

Des études ont montré que, dans les épices, il existe de nombreux constituants pouvant être rangés en deux familles, qui en assurent le caractère. Ces familles de constituants peuvent être mis en évidence et individualisés à l'aide de techniques appropriées.

Tout d'abord, on peut distinguer les huiles essentielles qui donnent à l'épice son parfum.

L'autre famille de constituants est constituée par les oléorésines qui déterminent le goût de l'épice.

La possibilité de séparer le goût du parfum est capital car cela permet de moduler de façon séparée, les deux paramètres de l'épice.

L'huile essentielle de l'épice peut être obtenue par distillation de celle-ci. Alors que pour obtenir les oléorésines, il est nécessaire de pulvériser l'épice dans un solvant, dans lequel elle stationnera le temps nécessaire pour dissoudre les oléorésines, puis de faire évaporer le solvant pour obtenir un résidu qui constitue précisément les oléorésines, c'est-à-dire le goût de l'épice.

Parmi les nombreux solvants susceptibles d'être utilisés, on pourra noter l'alcool, l'heptane, le chlorure de méthylène ou le butane, le toluène, le méthanol, l'acétone, l'éther de pétrole ou autres, ainsi que les solvants supercritiques.

Dans le cas du poivre, l'oléorésine très piquante susceptible d'être obtenue contient 40 % de pipérine alcaloïde du poivrier.

Il est bien évidemment très intéressant de pouvoir doser séparément le goût et le parfum donnés par une épice, néanmoins en raison de leur très forte concentration, il est nécessaire de procéder à leur dilution dans une solution appropriée qui pourra directement être utilisée dans les recettes.

En premier lieu, il est connu d'utiliser l'alcool pour former une solution porteuse. Les oléorésines contenues dans les épices pulvérisées se dissolvent dans l'alcool qui permet ainsi de véhiculer les oléorésines dissoutes.

Toutefois, cette technique offre plusieurs inconvénients. En particulier, l'utilisation d'alcool entraîne, sur le plan de la législation, de nombreuses contraintes. Ensuite, lorsqu'il s'agit de diluer la concentration d'utilisation d'alcool chargé des oléorésines, dans l'eau, on assiste à un phénomène d'assimilation de l'alcool dans l'eau et de précipitation des oléorésines. Par conséquent, le mélange final n'est absolument pas homogène et provoque des variations de goût importantes au sein de la préparation à assaisonner.

Par ailleurs, toutes les oléorésines ne sont pas solubles ou dispersibles dans l'alcool ; il faut donc utiliser d'autres solvants. Par exemple, l'oléorésine de romarin se disperse dans l'huile grasse mais ne se disperse pas dans l'alcool.

Il faut noter à ce sujet que, très souvent, l'eau est utilisée comme milieu de dissolution pour atteindre la concentration de liquide assaisonné voulue. Et par conséquent, le fait que ni les huiles essentielles, ni les oléorésines ne sont solubles dans l'eau constitue un handicap important.

On peut également utiliser un support pulvérulent comme agent porteur pour les principes essentiels des épices. A ce titre, le sel, le sucre ou le glutamate en poudre alimentaire peuvent être utilisés. Cette solution souffre néanmoins de l'inconvénient d'un apport extérieur en saveur qui vient perturber l'action de l'épice.

Il faut noter que, dans l'industrie de la salaison, le sel nitrité est employé pratiquement dans toutes les fabrications auxquelles il confère la couleur rose spécifique des salaisons. Disperser des oléorésines ou huiles essentielles d'épices sur du sel obligerait, pour éviter un goût salé trop prononcé des préparations, à diminuer la dose de sel nitrité, au détriment de la couleur de la préparation.

Par ailleurs, disperser les oléorésines et les huiles essentielles d'épices sur du sucre obligerait l'utilisateur à diminuer la dose de sucre employée ; or, le sucre est la "charge" la moins chère utilisée en salaison.

Enfin, disperser les oléorésines ou huiles essentielles d'épices sur du glutamate qui est un produit assez coûteux et ne peut, en raison de la réglementation, être employé dans toutes les préparations de charcuterie, notamment le jambon supérieur, ne serait pas une solution recherchée par les utilisateurs.

De plus, si l'on utilise comme agent de solution de l'eau, le sel ou le sucre sont correctement assimilés, par contre les oléorésines précipitent, ce qui nuit à l'homogénéité de la solution.

Cela étant, on connaît du document FR-A-2.245.296 un procédé de préparation d'un assaisonnement comprenant une oléorésine de poivre et/ou une oléorésine de curcuma ainsi qu'une essence essentielle de saveur et un agent d'enrobage stabilisant de l'émulsion.

Ce document impose des limites de concentration de la solution d'oléorésines et d'huiles essentielles dans l'émulsion et impose également des limites de concentration du stabilisant dans la phase aqueuse et dans l'émulsion.

Sur ce document, on forme une solution d'oléorésines et d'essences essentielles de saveur à une température donnée, que l'on mélange avec une solution aqueuse ou colloïdale, également à une température donnée puis on émulsionne le mélange de la solution d'oléorésines et de la phase aqueuse à l'aide d'un mélangeur mécanique à turbines du type "silverson mixer" par exemple. Le produit ainsi obtenu présente une certaine stabilité ; toutefois ce document propose la transformation desdites émulsions, par un procédé de séchage par pulvérisation, en microcapsule de saveur.

Les inconvénients inhérents à cette technique résident dans les limitations imposées et de la stabilité relative car on est en présence d'une émulsion avec des dimensions de gouttelettes de la phase dispersée indéterminées et non contrôlées, c'est-à-dire une émulsion ordinaire.

On connait également du document US-A-3.959.5l0 une technique permettant d'obtenir un mélange balancé résines - huiles essentiel les dont l'application concerne les boissons troubles.

Cette technique prévoit l'utilisation de résines végétales liposolubles dont le but est de balancer la densité des huiles essentielles aux alentours de la densité de la boisson. Ainsi, les particules solides résines - huiles essentielles obtenues, qui sont insolubles dans l'eau, ont une densité proche de la boisson de telle façon qu'elles ne remontent pas à la surface.

Un tel procédé ne permet pas d'arriver néanmoins à des microémulsions à base d'huiles essentielles et d'oléorésines, homogènes, stables, dispersibles dans l'eau et ne comprenant pas de phase solide.

Actuellement, on maîtrise très mal les principes essentiels des épices car on ne peut pas contrôler de façon précise l'homogénéité d'une solution porteuse des huiles essentielles et oléorésines au moment de son emploi.

Avec les impératifs économiques de la fabrication industrielle, qui s'est fortement développée dans le domaine de la charcuterie, il est nécessaire aujourd'hui de contrôler parfaitement le rôle joué par chacun des constituants des épices. Dans ces conditions, il est capital de pouvoir jouer sur chacun des facteurs qui conditionnent le goût, le parfum d'un produit, de même que les techniques de mises en oeuvre doivent être parfaitement maîtrisables sur le plan industriel.

Le but principal de la présente invention est de présenter un procédé de diffusion des huiles essentielles et oléorésines d'épices dans une solution porteuse, selon lequel l'homogénéité du produit final est excellente. Dans ces conditions, une fabrication industrielle peut être entreprise étant donné qu'il y a une assurance quant à la stabilité et l'équilibre du goût et du parfum du produit alimentaire assaisonné.

Cette possibilité de travailler à grande échelle permet d'abaisser les coûts de fabrication, d'autant plus que la technique de mise en oeuvre de la présente invention peut être assurée avec l'emploi de matériel standard.

Un autre but de la présente invention est de présenter un procédé de diffusion qui permet de fabriquer de façon industrielle des produits alimentaires analogues aux recettes traditionnelles de naguère qui jusqu'à présent avaient dû être abandonnées en raison de leur temps de préparation fort important.

Par exemple, la fabrication de jambon à l'ancienne, avec un temps de repos dans de la saumure durant trois semaines et cuisson dans un bouillon avec bouquet garni et aromates, est totalement abandonnée de nos jours. Cela est d'autant plus regrettable qu'il s'agit d'un produit de haute qualité et de saveur particulière.

Le procédé de la présente invention permet d'obtenir un produit similaire au jambon à l'ancienne, compatible avec les impératifs économiques actuels, c'est-à-dire un temps de préparation et de stockage court.

Un autre avantage de la présente invention est un progrès important sur le plan de l'hygiène. En effet, les épices utilisées actuellement sous forme de poudre sont fort polluées et contaminées. Avec le procédé de la présente invention, on réalise une stérilisation du produit par broyage cellulaire des différentes levures et microbes présents, ainsi que de leurs spores. Par ailleurs, le produit obtenu en phase liquide peut facilement être pasteurisé pour achever sa stérilisation.

D'autres buts et avantages de la présente invention apparaîtront au cours de la description qui va suivre.

Selon l'invention, le procédé de diffusion des huiles essentielles et oléorésines d'épices dans une solution porteuse, lesdites huiles essentielles étant obtenues par distillation des épices et lesdites oléorésines représentant notamment les résidus d'évaporation d'une dissolution des épices dans un solvant, est caractérisé en ce que :

- on forme une première solution homogène d'un mélange d'huiles végétales, d'huiles essentielles et d'oléorésines des épices, selon la concentration d'utilisation de la diffusion à former,
- on forme une deuxième solution porteuse colloïdale à base d'agents émulsifiants,
- on mélange cette première solution d'huiles végétales, d'huiles essentielles et d'oléorésines dans ladite deuxième solution porteuse colloïdale,
- on émulsionne le mélange ainsi formé en brassant énergiquement, pour disperser les huiles essentielles et oléorésines des épices,
- on réduit les huiles essentielles et les oléorésines des épices, dans l'émulsion, en microgouttelettes, dont la taille est au plus de l'ordre du $\mu$m, et on empêche la reconstitution en masse des microgouttelettes d'huiles et/ou d'oléorésines, ainsi éclatées, en les entourant d'une couche périphérique d'émulsifiant.

Ainsi, en mettant en oeuvre le procédé de diffusion de l'invention, on arrive à l'obtention d'un assaisonnement culinaire qui se présente sous la forme d'une microémulsion homogène, stable et dispersible dans l'eau, d'huiles végétales, d'huiles essentielles et d'oléorésines des épices, dans laquelle les huiles et les oléorésines se présentent sous la forme de microgouttelettes, dont la taille est au plus de l'ordre du $\mu$m, entourées d'une couche périphérique d'émulsifiant.

L'invention autorisera l'utilisation d'un tel assaisonnement culinaire dans la préparation de charcuterie, la préparation de cuisine sous vide, la préparation de mets culinaires cuits à l'eau ou encore sa dilution dans des boissons.

L'invention sera mieux comprise à la lecture de la description suivante, accompagnée de dessins en annexe parmi lesquels :

- la figure 1 représente de façon schématique les différentes phases du procédé de diffusion selon la présente invention,
- la figure 2 illustre une vue de détail des éléments microscopiques présents dans la solution porteuse de la diffusion de la présente invention.

La présente invention vise un procédé de diffusion des huiles essentielles et oléorésines d'épices dans une solution porteuse. Elle trouvera notamment son application dans le domaine de la charcuterie et/ou de la cuisine sous vide pour constituer des assaisonnements indispensables à la saveur des plats culinaires.

En matière de cuisine industrielle, il est nécessaire d'allier qualité du produit obtenu et économie.

Pour atteindre une maîtrise en ce qui concerne le goût et le parfum des produits fabriqués, il est nécessaire de connaître l'influence de chacun des ingrédients introduits dans la recette. Précisément dans ce domaine, l'influence des épices est prépondérante.

Des études poussées ont montré qu'il était possible de distinguer au sein même d'une épice, les éléments ayant une influence sur le goût et les éléments ayant une influence sur le parfum.

En particulier, les huiles essentielles représentent le facteur déterminant en ce qui concerne le parfum alors que les oléorésines caractérisent le goût.

Certaines techniques permettent d'extraire des épices, les principes essentiels qui peuvent ainsi être utilisés en tout indépendance pour prononcer le goût ou le parfum de la charcuterie, par exemple.

Toutefois, en raison de leur forte concentration, ces huiles essentielles et oléorésines ne peuvent être utilisées pures et doivent nécessairement être diluées dans une solution porteuse qui sera exploitable.

En distillant l'épice, on obtient une huile essentielle qui est le parfum de l'épice.

En dissolvant l'épice pulvérisée dans un solvant tel que de l'alcool, de l'heptane, du chlorure de méthylène, du butane, du toluène, du méthanol, de l'acétone, de l'éther de pétrole ou autre, on parvient à dissoudre les oléorésines qui peuvent ensuite être récupérées sous forme de résidu en faisant évaporer le solvant. Ces oléorésines assurent le goût de l'épice.

Quoiqu'il en soit, il est nécessaire ensuite de prendre un support pour véhiculer les oléorésines. Jusqu'à présente, on se sert soit d'alcool, soit d'un support pulvérulent.

L'inconvénient de l'alcool est qu'il est soluble dans l'eau et par conséquent, lorsqu'on procède à la diffusion du mélange dans l'eau, les oléorésines précipitent, ce qui détruit l'homogénéité de la concentration, d'autre part il ne dissout pas toutes les oléorésines.

Lorsqu'un support pulvérulent est utilisé, tel que du sucre, sel ou glutamate, il y a l'inconvénient de voir ces produits introduits dans la recette, ce qui en altère le goût. Par ailleurs, il s'agit de supports pulvérulents solubles dans l'eau, contrairement aux oléorésines qui précipitent lors de la diffusion dans l'eau.

Selon le procédé de la présente invention, on extrait les principes essentiels des épices selon les techniques de distillation en ce qui concerne les huiles essentielles et d'évaporation après dissolution dans un solvant pour ce qui concerne les oléorésines. Il faut toutefois noter à ce sujet que d'autres techniques de séparation, à la portée de l'Homme de l'Art peuvent également être utilisées pour décomposer l'épice.

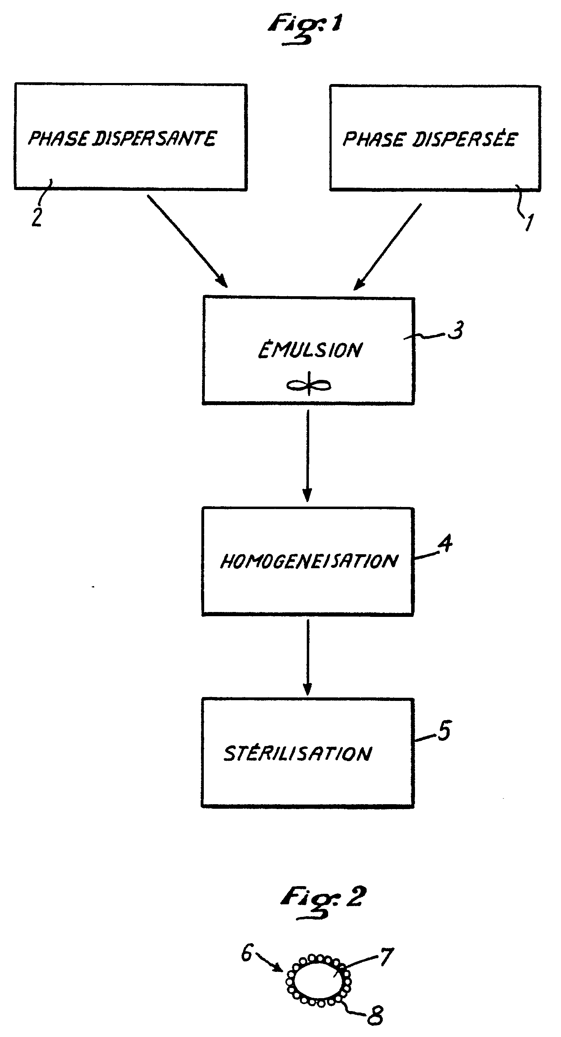

Tout d'abord, selon le procédé de diffusion de la présente invention, on forme une première solution homogène par mélange selon la concentration d'utilisation de la diffusion à former, d'huiles végétales, d'huiles essentielles et d'oléorésines des épices. Cette première étape, appelée phase dispersée, est schématisée sur la figure 1 en (1).

De plus, il est à remarquer que, selon la consistance des oléorésines employées, on chauffe avantageusement ladite première solution à une température voisine de 50° C pour favoriser leur liquéfaction et par suite rendre la solution plus homogène.

Ensuite, on forme une deuxième solution porteuse colloïdale schématisée à la figure en (2) par la phase dispersante.

Cette solution porteuse colloïdale est en France réalisée à l'aide d'émulsifiants autorisés tels que la gomme d'accacia dans de l'eau. On fait ensuite gonfler cette solution pendant un temps assez long, de l'ordre de quatre heures, par exemple.

Toutefois, il est à remarquer qu'il existe d'autres émulsifiants non autorisés en France, mais autorisés dans des pays étrangers, tels que le monolaurate de sorbitane, le monostéarate de sorbitane, le monolaurate de polyoxyéthylène sorbitane, le monostéarate de polyoxyéthylène de sorbitane, le stéarate de sorbitane. De tels émulsifiants pourraient être utilisés pour mettre en oeuvre le procédé de la présente invention.

Ensuite, comme schématisé à la phase (3) de la figure 1, on mélange la solution d'huile végétale, d'huile essentielle et d'oléorésine dans la solution porteuse colloïdale.

Préalablement, pour éviter les précipitations lors du mélange, qui seraient obtenues du fait de la différence de température des deux solutions, on portera la solution porteuse à une température voisine de celle de la solution d'huiles végétales, d'huiles essentielles et d'oléorésines soit à environ 50° C.

Ensuite, on émulsionne ce mélange en brassant énergiquement jusqu'à une préémulsion dite de "blanchiment". Dans cette phase, on disperse les huiles essentielles et oléorésines des épices.

Par rapport aux méthodes traditionnelles selon la présente invention, on n'utilise pas de milieu de dissolution particulier pour les oléorésines qui sont directement introduites dans la solution porteuse colloïdale.

Les huiles essentielles non missibles se présentent sous la forme de gouttes alors que les oléorésines se présentent sous la forme de gouttes grossières, qui ne sont pas hydrosolubles.

Tout effort pour tenter d'homogénéiser tel quel le mélange réalisé serait vain et on enregistre de fortes variations de concentration.

L'étape suivante du procédé est la phase d'homogénéisation de l'émulsion ainsi formée, représentée en (4) sur la figure 1 dans laquelle on réduit les huiles et les oléorésines des épices en microgouttelettes. L'homogénéité de la concentration n'est pas totalement atteinte, toutefois l'ensemble des microgouttelettes s'apparentent dans la solution porteuse colloïdale à un milieu liquide.

On empêche les microgouttelettes de se reconstituer en masse. Il est en effet primordial de préserver l'aspect diffus des microgouttelettes dans la solution porteuse pour que l'on puisse obtenir une homogénéité de la diffusion.

La réduction en microgouttelettes des résidus d'oléorésines et des gouttelettes d'huile est réalisée en faisant subir au mélange une forte compression suivie d'une détente brusque.

En adoptant une pression voisine de quatre cent cinquante bars et une détente allant jusqu'à un bar, on parvient à briser les gouttes d'oléorésines selon des microgouttelettes dont la taille est généralement inférieure à un $\mu$m.

On obtient donc une émulsion homogène dans laquelle sont présentes et réparties de toute part des microgouttelettes d'huiles essentielles et des microgouttelettes d'oléorésines. En effet, la dimension des microgouttelettes conjuguée à une large diffusion garantit l'homogénéité de l'émulsion finale.

Par ailleurs, l'émulsion (4) réalisée est parfaitement homogène et peut directement être utilisée étant donné qu'elle a été dosée selon la concentration d'utilisation.

Une des difficultés rencontrées est qu'il est nécessaire ensuite d'empêcher la reconstitution en masse des microgouttelettes ainsi éclatées.

Cet objectif est atteint en diminuant la tension superficielle de la solution porteuse colloïdale pour éviter tout regroupement des microgouttelettes.

Cette diminution de la tension superficielle joue également une action sur les huiles essentielles qui brisées en fines gouttelettes demeurent également dans cet état.

La diminution de la tension superficielle est, comme il a été mentionné préalablement, obtenue en chargeant la solution porteuse d'un agent émulsifiant, notamment en France par l'association synergétique de gomme d'accacia.

L'agent émulsifiant, assimilé à la solution porteuse, enveloppe chaque microgouttelette en adhérant à sa surface, tel qu'illustré à la figure 2.

Comme le montre cette dernière de façon très grossie, l'émulsion est formée par une multitude de microgouttelettes (6) constituées par les microgouttes d'huile et/ou les microgouttelettes d'oléorésines (7) entourées d'une couche périphérique (8) d'émulsifiant.

De plus, aux termes des deux étapes d'homogénéisation et de stérilisation, la température de la diffusion ainsi obtenue sera avantageusement abaissée sensiblement à la température ambiante (18°C environ) pour autoriser son conditionnement selon les méthodes traditionnelles.

A titre d'exemple, les microgouttelettes d'huiles ou d'oléorésines ont un diamètre maximum de $10^{-6}$ mètres alors que les microgouttelettes d'émulsifiant présentent un diamètre compris entre $10^{-7}$ et $10^{-9}$ mètres.

De par la coopération de l'agent émulsifiant, des microgouttelettes d'huiles et des microgouttelettes d' oléorésines, ces deux dernières peuvent subsister au sein de la solution porteuse malgré les différences de densité.

Par ailleurs, selon la présente invention, on stérilise l'émulsion ainsi homogénéisée en faisant subir au mélange une deuxième forte compression suivie d'une détente brusque. Sous l'effet de cette pression, les cellules des organismes microbiens tels que levures, bactéries, seront détruites et le produit obtenu sera parfaitement stérile, du fait de l'éclatement cellulaire.

Cette stérilisation sera menée à l'étape (5) schématisée sur la figure 1 à une pression voisine de cinq cents bars suivie d'une détente allant jusqu'à un bar.

En mettant en oeuvre la présente invention, on constituera un assaisonnement notamment utilisable dans le domaine de la charcuterie et/ou de la cuisine sous vide, qui se présentera sous la forme d'une émulsion parfaitement homogène et stérile et qui pourra être utilisée soit en solution, dans de l'eau ou de la saumure par exemple, soit directement.

A titre d'exemple, on a remarqué de bons résultats en mettant en oeuvre le procédé d'obtention de l'émulsion "oléorésines - huiles essentielles" de la présente invention suivant :

- on disperse, sous agitation, l'agent émulsifiant dans de l'eau, par exemple qui constitue la solution porteuse. Plus précisément, on dispersera vingt à soixante kilogrammes d'une association synergétique de gommes d'accacia dans mille titres d'eau et on laissera cette dispersion gonfler pendant quatre heures,

- on prépare un mélange d'huile végétale telle que huile de soja, de tournesol ou d'arachide, d'oléorésines et d'huiles essentielles choisies en fonction de la préparation à composer et on utilisera par exemple comme "bouquet garni" les oléorésines et huiles essentielles du thym, du laurier, des oignons, des carottes, du girofle. Ensuite, on amènera ce mélange à une température de 50°C environ tout en agitant pour rendre le mélange homogène,

- on incorpore ce mélange dans l'eau contenant l'émulsifiant et on le met en agitation jusqu'à obtention d'une pré-émulsion, cette opération étant continuée jusqu'au "blanchiment" de la pré-émulsion, on veillera à ce que le mélange eau émulsifiant soit également à une température d'environ 50°C avant d'être incorporé pour éviter la prise en masse de certaines oléorésines telles que le poivre, le curcuma, le thym ou le laurier,

- enfin, on homogénéisera l'émulsion dans un appareil à haute pression, à deux étages, apte à élever la pression à des valeurs de l'ordre de quatre cent cinquante à cinq cents bars.

De cette manière, l'émulsion obtenue est parfaitement homogène et après contrôle au microscope, présente une bonne régularité les microgouttes d'huiles essentielles et microgouttelettes d'oléorésines présentant un diamètre sensiblement inférieur au $\mu$mètre.

Actuellement, la fabrication du "jambon à l'ancienne" se fait en plongeant le jambon dans de la saumure nitratée durant trois semaines. La saumure est formée d'un mélange de sel, tel que nitrate de potassium, et de sucre. Pendant le saumurage, les bactéries transforment le nitrate en nitrite qui se combine à l'hémoglobine et la myoglobine du jambon et lui donne sa teinte rosée.

A l'issue de cette période de saumurage, le jambon est cuit au bouillon accompagné d'un bouquet garni et d'aromates. Ainsi, le jambon est imprégné à coeur par les épices.

Avec les impératifs industriels actuels, la fabrication du jambon s'est transformée et aujourd'hui la saumure dite "de pompage" composée d'eau, de sel nitrité et de sucre, est directement injectée dans le jambon. Ensuite, le jambon est "baratté" puis subit une cuisson dans un moule sous vide. Il y a évidemment un gain de temps appréciable, toutefois l'absence de cuisson dans le bouillon a pour conséquence de priver le jambon de son goût de bouquet garni.

Selon le procédé de la présente invention, il est possible de réaliser la dispersion instantanée et stable d'une émulsion de bouquet garni dans la saumure qui est ensuite injectée dans le jambon. De la sorte, sans perte de temps, le jambon est entièrement aromatisé comme dans la préparation "à l'ancienne".

A titre d'exemple, pour obtenir un "jambon à l'ancienne" selon la présente invention, on disperse un litre d'émulsion de bouquet garni réalisé selon le procédé de l'invention, dans environ deux cents litres de saumure, et il est ainsi possible d'aromatiser le jambon sans rien changer à la méthode industrielle habituelle de travail décrite ci-dessus.

Par ailleurs, on peut mettre en oeuvre la présente invention dans d'autres domaines de la charcuterie, par exemple pour la fabrication du saucisson, tripes, pâté de tête, etc. Quelques exemples suivent.

Pour la fabrication de saucisson dit "saucisson Paris Ail", dans l'eau de mouillage utilisée dans la fabrication du saucisson, on dispersera sensiblement un litre d'émulsion d'assaisonnement adhoc réalisée selon l'invention pour environ deux cents kilogrammes de mêlée. Dans ce cas, l'émulsion assaisonnement "paris ail" comportera les oléorésines et huiles essentielles nécessaires pour donner à cette préparation son goût traditionnel.

En ce qui concerne le "saucisson sec" et/ou le "salami" qui ne nécessite pas d'eau pour leur fabrication, dans ce cas on incorporera intimement à la mêlée, une quantité d'émulsion d'assaisonnement spécifique réalisée selon l'invention de dosage adéquat. Ainsi, on évitera d'utiliser des épices naturelles fortement polluées et non stériles.

Selon le même principe, pour la réalisation de "tripes, pâté de tête, etc," qui sont généralement des préparations cuites à l'eau, on pourra également intégrer l'émulsion de bouquet garni qui sera notamment ajoutée au cours de la dernière heure de cuisson et dont la diffusion sera parfaite et rapide.

D'autres mises en oeuvre de la présente invention, à la portée de l'Homme de l'Art, auraient également pu être envisagées telle qu'une utilisation dans les préparations de la cuisine sous vide.

## Revendications

1. Procédé de diffusion des huiles essentielles et oléorésines des épices dans une solution porteuse, lesdites huiles essentielles étant obtenues par distillation des épices et lesdites oléorésines représentant notamment les résidus d'évaporation d'une dissolution des épices dans un solvant, **caractérisé** en ce que :
   - on forme une première solution homogène d'un mélange d'huiles végétales, d'huiles essentielles et d'oléorésines des épices, selon la concentration d'utilisation de la diffusion à former,
   - on forme une deuxième solution porteuse colloïdale à base d'agents émulsifiants,
   - on mélange cette première solution d'huiles végétales, d'huiles essentielles et d'oléorésines dans ladite deuxième solution porteuse colloïdale,
   - on émulsionne le mélange ainsi formé en brassant énergiquement, pour disperser les huiles essentielles et oléorésines des épices,
   - on réduit les huiles essentielles et les oléorésines des épices, dans l'émulsion, en microgouttelettes, dont la taille est au plus de l'ordre du $\mu$m, et on emêpche la reconstitution en masse des microgouttelettes d'huiles et/ou d'oléorésines, ainsi éclatées, en les entourant d'une couche périphérique d'émulsifiant.

2. Procédé de diffusion, selon la revendication 1, **caractérisé** en ce que l'on réduit en microgouttelettes les huiles essentielles et les oléorésines des épices en faisant subir au mélange émulsionné au moins une forte compression suivie d'une détente brusque.

3. Procédé de diffusion, selon la revendication 2, **caractérisé** en ce que l'on fait subir au mélange ainsi homogénéisé une deuxième forte compression suivie d'une détente brusque.

4. Procédé de diffusion, selon la revendication 1, **caractérisé** en ce que l'on diminue la tension superficielle de la solution porteuse pour favoriser la formation d'une émulsion des huiles essentielles et microgouttelettes d'oléorésines dans la solution porteuse et en assurer la stabilité.

5. Procédé de diffusion, selon la revendication 1, **caractérisé** en ce que l'on utilise au titre d'émulsifiant la gomme d'accacia.

6. Procédé de diffusion, selon la revendication 1, **caractérisé** en ce que l'on utilise au titre d'émulsifiant le monolaurate de sorbitane, le monostéarate de sorbitane, le monolaurate de polyoxyéthylène sorbitane, le monostéarate de polyoxyéthylène de sorbitane, le stéarate de sorbitane.

7. Procédé de diffusion, selon la revendication 1, **caractérisé** en ce que l'on pressurise le mélange jusqu' à environ quatre cent cinquante à cinq cents bars avant de le détendre brusquement jusqu'à environ un bar afin de réduire les huiles essentielles et les oléorésines des épices à des microgouttelettes de taille inférieure à un $\mu$m.

8. Procédé de diffusion, selon la revendication 1, **caractérisé** en ce que :
   - on disperse sous agitation vingt, à soixante kilogrammes d'une association synergétique de gommes d'accacia dans environ mille litres d'eau et on laisse gonfler cette dispersion sensiblement pendant quatre heures,
   - on mélange selon la concentration d'utilisation de la diffusion à former les huiles végétales, les huiles essentielles et les oléorésines et on rend ce mélange homogène avec un agitateur et on élève sa température à environ 50° C,
   - on incorpore ce mélange huiles végétales - oléorésines - huiles essentielles dans le mélange eau - émulsifiant et on agite jusqu'à obtention d'une pré-émulsion,
   - on homogénéise et on stérilise la pré-émulsion ainsi formée dans un appareil à haute pression, à deux étages, apte à développer des pressions de quatre cent cinquante et cinq cents bars, le premier étage assurant l'homogénéisation, le deuxième étage la destruction des cellules microbiennes.

9. Procédé de diffusion, selon l'une quelconque des revendications précédentes, destiné à donner un arôme de bouquet garni à du jambon, **caractérisé** en ce que l'on réalise une émulsion homogénéisée d'huiles essentielles et d'oléorésines de bouquet garni immédiatement et totalement soluble dans de la saumure et on injecte ce liquide dans le jambon.

10. Procédé de diffusion, selon l'une quelconque des revendications précédentes, destiné à donner un assaisonnement spécifique à chaque préparation de charcuterie ou préparation de cuisine sous vide, **caractérisé** en ce que l'on incorpore cette émulsion d'huiles essentielles et d'oléorésines intimement à la mêlée lors de la fabrication de la charcuterie.

11. Procédé de diffusion, selon l'une quelconque des revendications précédentes, destiné à donner un arôme de bouquet garni ou tout autre goût à des préparations culinaires cuites à l'eau, **caractérisé** en ce que l'on incorpore une émulsion d'huiles essentielles et d'oléorésines de bouquet garni ou autre assaisonnement immédiatement et totalement soluble dans l'eau de la cuisson desdites préparations.

12. Assaisonnement culinaire, obtenu par la mise en oeuvre du procédé de diffusion selon l'une quelconque des revendications précédentes, **caractérisé** par le fait qu'il se présente sous la forme d'une émulsion homogène, stable et dispersible dans l'eau, d'huiles végétales, d'huiles essentielles et d'oléorésines des épices, dans laquelle les huiles et les oléorésines se présentent sous la forme de microgouttelettes, dont la taille est au plus de l'ordre du $\mu$m, entourées d'une couche périphérique d'émulsifiant.

13. Utilisation de l'assaisonnement culinaire, selon la revendication 12, dans la préparation de charcuterie ou la préparation de cuisine sous vide.

14. Utilisation de l'assaisonnement culinaire, selon la revendication 12, dans la préparation de mets culinaires cuits à l'eau.

**Claims**

1. Process for diffusing essential oils and oleoresins from spices in a vehicle solution, the said essential oils being obtained by distillation of the spices and the said oleoresins representing notably the evaporation residues of a dissolution of the spices in a solvent, characterized in that:

- a first homogeneous solution of a mixture of vegetable oils, essential oils and oleoresins of the spices is formed, according to the concentration at which the diffusion to be formed will be used,
- a second, colloidal vehicle solution based on emulsifying agents is formed,
- this first solution of vegetable oils, essential oils and oleoresins is mixed in the said second colloidal vehicle solution,
- the mixture thus formed is emulsified by stirring vigorously to disperse the essential oils and oeloresins of the spices,
- the essential oils and oleoresins of the spices are reduced, in the emulsion, to micro-droplets, the size of which is at most in the order of a $\mu$m, and the reconstitution as a mass of the micro-droplets of oils and/or oleoresins, thus split up, is prevented by surrounding them with a peripheral layer of emulsifier.

2. Diffusion process according to claim 1, characterized in that the essential oils and the oleoresins of the spices are reduced to micro-droplets by subjecting the emulsified mixture to strong compression at least once, followed by sudden expansion.

3. Diffusion process according to claim 2, characterized in that the mixture thus homogenized is subjected to strong compression a second time, followed by sudden expansion.

4. Diffusion process according to claim 1, characterized in that the surface tension of the vehicle solution is reduced to promote the formation of an emulsion of the essential oils and micro-droplets of oleoresins in a vehicle solution and ensure the stability thereof.

5. Diffusion process according to claim 1, characterized in that acacia gum is used as an emulsifier.

6. Diffusion process according to claim 1, characterized in that sorbitane monolaurate, sorbitane monostearate, sorbitane polyoxyethylene monolaurate, sorbitane polyoxyethylene monostearate or sorbitane stearate is used as an emulsifier.

7. Diffusion process according to claim 1, characterized in that the mixture is pressurized up to approximately four hundred and fifty to five hundred bar before it is abruptly expanded down to approximately one bar in order to reduce the essential oils and the oleoresins of the spices to micro-droplets having a size of less than one $\mu$m.

8. Diffusion process according to claim 1, characterized in that:

- twenty to sixty kilograms of a synergetic association of acacia gums are dispersed in approximately one thousand litres of water and this dispersion is allowed to swell substantially for four hours,
- the vegetable oils, the essential oils and the oleoresins are mixed according to the concentration of the diffusion to be formed that will be used and this mixture is made homogeneous with a stirrer, and its temperature is raised to approximately 50°C,
- this vegetable oil-oleoresin-essential oil mixture is incorporated in the water-emulsifier mixture and it is stirred until a pre-emulsion is obtained,
- the pre-emulsion thus formed is homogenized and sterilized in a two-stage high-pressure apparatus suitable for building up pressures of four hundred and fifty and five hundred bar, the first stage carrying out the homogenization and the second stage the destruction of the microbial cells.

9. Diffusion process according to any one of the preceding claims, designed to impart to ham an aroma of mixed herbs, characterized in that a homogenized emulsion of essential oils and oleoresins of mixed herbs immediately and totally soluble in brine is prepared and this liquid is injected into the ham.

10. Diffusion process according to any one of the preceding claims, designed to impart a specific seasoning to every vacuum packed delicatessen preparation or culinary preparation, characterized in that this emulsion of essential oils and oleoresins is intimately blended in at the time of making the delicatessen.

11. Diffusion process according to any one of the preceding claims, designed to impart an aroma of mixed herbs or any other flavour to culinary preparations cooked in water, characterized in that an immediately and totally soluble emulsion of essential oils and oleoresins of mixed herbs or other seasoning is incorporated in the water in which the said preparations are cooked.

12. Culinary seasoning obtained by implementing the diffusion process according to any one of the preceding claims, characterized by the fact that it takes the form of an emulsion that is homogeneous, stable and dispersible in water, of vegetable oils, essential oils and oleoresins of spices, wherein the oils and the oleoresins take the form of micro-droplets the size of which is at most in the order of one $\mu$m, surrounded by a peripheral layer of emulsifier.

13. Use of the culinary seasoning according to claim 12 in the preparation of vacuum packed delicatessen or culinary dishes.

14. Use of the culinary seasoning according to claim 12 in the preparation of culinary dishes cooked in water.

**Ansprüche**

1. Verfahren zur Diffusion von ätherischen Ölen und Kräuterölharzen in einer Trägerlösung, wobei die genannten ätherischen Öle durch Destillation der Kräuter erhalten werden und die genannten Ölharze nämlich die Verdampfungsrückstände einer Lösung der Kräuter in einem Lösungsmittel sind, dadurch gekennzeichnet, daß:
    - eine erste homogene Lösung einer Mischung von Pflanzenölen, ätherischen Ölen und Kräuterölharzen, je nach der Verwendungskonzentration der zu bildenden Diffusion, hergestellt wird,
    - eine zweite emulgatorhaltende kolloidale Trägerlösung hergestellt wird,
    - diese erste Lösung von Pflanzenölen, ätherischen Ölen und Kräuterölharzen mit der genannten zweiten kolloidalen Trägerlösung gemischt wird,
    - die also gebildete Mischung emulgiert wird, wobei energisch gerührt wird, zum Dispergieren der ätherischen Öle und der Kräuterölharze,
    - die ätherischen Öle und die Kräuterölharze in der Emulsion zu Mikrotröpfchen, deren Größe höchstens im Bereich des $\mu$m liegt, reduziert werden und die massenhafte Neubildung der also aufgesprungenen Öl- und/oder Ölharzmikrotröpfchen vermieden wird, indem sie mit einer peripheren Emulgatorschicht umgeben werden.

2. Verfahren zur Diffusion nach Anspruch 1, dadurch gekennzeichnet, daß die ätherischen Öle und die Kräuterölharze zu Mikrotröpfchen reduziert werden, indem die emulgierte Mischung wenigstens einer starken Verdickung und danach einer plötzlichen Entspannung unterworfen wird.

3. Verfahren zur Diffusion nach Anspruch 2, dadurch gekennzeichnet, daß die also homogenisierte Mischung einer zweiten starken Verdickung und danach einer plötzlichen Entspannung unterworfen wird.

4. Verfahren zur Diffusion nach Anspruch 1, dadurch gekennzeichnet, daß die Oberflächenspannung der Trägerlösung vermindert wird, um die Bildung einer Emulsion der ätherischen Öle und Ölharzmikrotröpfchen in der Trägerlösung zu befördern und deren Stabilität zu sichern.

5. Verfahren zur Diffusion nach Anspruch 1, dadurch gekennzeichnet, daß Akaziengummi als Emulgator verwendet wird.

6. Verfahren zur Diffusion nach Anspruch 1, dadurch gekennzeichnet, daß Sorbitanmonolaurat, Sorbitanmonostearat, Sorbitanpolyoxyäthylenmonolaurat, Sorbitanpolyoxyäthylenmonostearat, Sorbitanstearat als Emulgator verwendet werden.

7. Verfahren zur Diffusion nach Anspruch 1, dadurch gekennzeichnet, daß die Mischung unter einen Druck von etwa vierhundertfünfzig bis fünfhundert Bar gesetzt wird, bevor sie plötzlich bis zu etwa einem Bar zu entspannen, um die ätherischen Öle und die Kräuterölharze zu Mikrotröpfchen einer Größe kleiner als ein $\mu$m zu reduzieren.

8. Verfahren zur Diffusion nach Anspruch 1, dadurch gekennzeichnet, daß:
    - zwanzig bis sechzig Kilogramm einer synergetischen Verbindung von Akaziengummi unter Rührung in etwa eintausend Liter Wasser dispergiert wird und man diese Dispersion im wesentlichen vier Stunden lang quellen läßt,
    - die Pflanzenöle, die ätherischen Öle und die Ölharze je nach der Verwendungskonzentration der zu bildenden Diffusion gemischt werden und diese Mischung mit einem Rührwerk homogen gemacht und deren Temperatur auf ca. 50°C gebracht wird,
    - diese Pflanzenölen-Ölharzen-ätherische ölenmischung in eine Wasser-Emulgatormischung eingeführt und bis zum Erhalten einer Voremulsion gerührt wird,
- die also gebildete Voremulsion in einem zweistufigen Hochdruckgerät, das geeignet ist, Drucke von vierhundertfünfzig und fünfhundert Bar zu entwickeln, homogenisiert und sterilisiert wird, wobei die erste Stufe die Homogenisierung und die zweite Stufe die Vernichtung der Mikrobenzellen sichern.

9. Verfahren zur Diffusion nach irgendwelchem der vorstehenden Ansprüche, dazu bestimmt, Schinken ein Suppengrünaroma zu verleihen, dadurch gekennzeichnet, daß eine sofort und völlig in Salzbrühe lösbare, homogenisierte Emulsion von ätherischen Ölen und Suppengrünölharzen gefertigt und diese Flüssigkeit in den Schinken eingespritzt wird.

10. Verfahren zur Diffusion nach irgendwelchem der vorstehenden Ansprüche, dazu bestimmt, irgendwelchen Fleisch- und Wurstwaren oder Kochwaren unter Vakuum spezifisch zu würzen, dadurch gekennzeichnet, daß diese ätherische Ölen- und Ölharzenemulsion der Mischung bei der Fertigung der Fleisch- und Wurstwaren innig zugefügt wird.

11. Verfahren zur Diffusion nach irgendwelchem der vorstehenden Ansprüche, dazu bestimmt, in Wasser gekochten Kochwaren ein Suppengrünaroma oder irgendwelchen anderen Geschmack zu verleihen, dadurch gekennzeichnet, daß eine sofort und völlig im Kochwasser der genannten Waren lösbare Emulsion von ätherischen Ölen und Suppengrün-oder sonstigen Würzenölharzen zugefügt wird.

12. Kochwürzung, die durch Anwendung des Verfahrens zur Diffusion nach irgendwelchem der vorstehenden Ansprüche erhalten wird, dadurch gekennzeichnet, daß sie als eine homogene, stabile und in Wasser dispergierbare Emulsion von Pflanzenölen, ätherischen Ölen und Kräuterölharzen gefertigt ist, in der die Öle und die Ölharze als mit einer peripheren Emulgatorschicht umgebene Mikrotröpfchen, deren Größe höchstens im Bereich des $\mu$m liegt, vorkommen.

13. Verwendung der Kochwürzung, nach dem Anspruch 12, bei der Vorbereitung von Fleisch- und Wurstwaren oder Kochwaren unter Vakuum.

14. Verwendung der Kochwürzung, nach dem Anspruch 12, bei der Vorbereitung von in Wasser gekochten Kochgerichten.

## Fig. 1

PHASE DISPERSANTE

2

PHASE DISPERSÉE

1

ÉMULSION

3

HOMOGENEISATION

4

STÉRILISATION

5

## Fig. 2

6

7

8